# EUROPÄISCHE PATENTANMELDUNG

(11) **EP 1 662 262 A1**
(43) Veröffentlichungstag der Anmeldung: **31.05.2006**
(21) Anmeldenummer: 05025226.1
(22) Anmeldetag: 18.11.2005
(51) Int. Cl.: G01P 1/02

(54) **Drehzahlsensor mit integrierter Elektronik, insbesondere zur Anwendung bei Schienenfahrzeugen**

(30) Priorität: 29.11.2004 CH 19652004
(71) Anmelder: Jaquet AG, 4054 Basel (CH)
(72) Erfinder: Peter, Albert, 4411 Seltisberg (CH)
(74) Vertreter: Blum, Rudolf Emil

(57) **Zusammenfassung**

Beim stillstehenden Teil (1) eines Drehzahlsensors wird die Sensorelektronik (3) in den selben Gehäuseabschnitt (6) wie der Sensor (2) verlegt. Damit kann der in Bezug auf einen Befestigungsabschnitt (5) dem Sensorabschnitt entgegengesetzt angeordnete Kabelanschlussabschnitt (7) sehr kurz gehalten werden. Dadurch werden auch die vom Kabel (9) auf das Gehäuse (4) des Sensorteils (1) ausgeübten Kräfte geringer, was insbesondere ein Gehäuse aus Kunststoff auch bei rauhen Betriebsumgebungen, so z.B. bei Schienenfahrzeugen, möglich macht.

## Beschreibung

Die Erfindung betrifft einen stillstehenden Drehzahlsensorteil gemäss Oberbegriff des Anspruchs 1 sowie einen Drehzahlsensor mit einem solchen. Ferner betrifft die Erfindung die Anwendung solcher Teile bzw. Sensoren und ein Verfahren zur Herstellung eines Drehzahlsensorteiles.

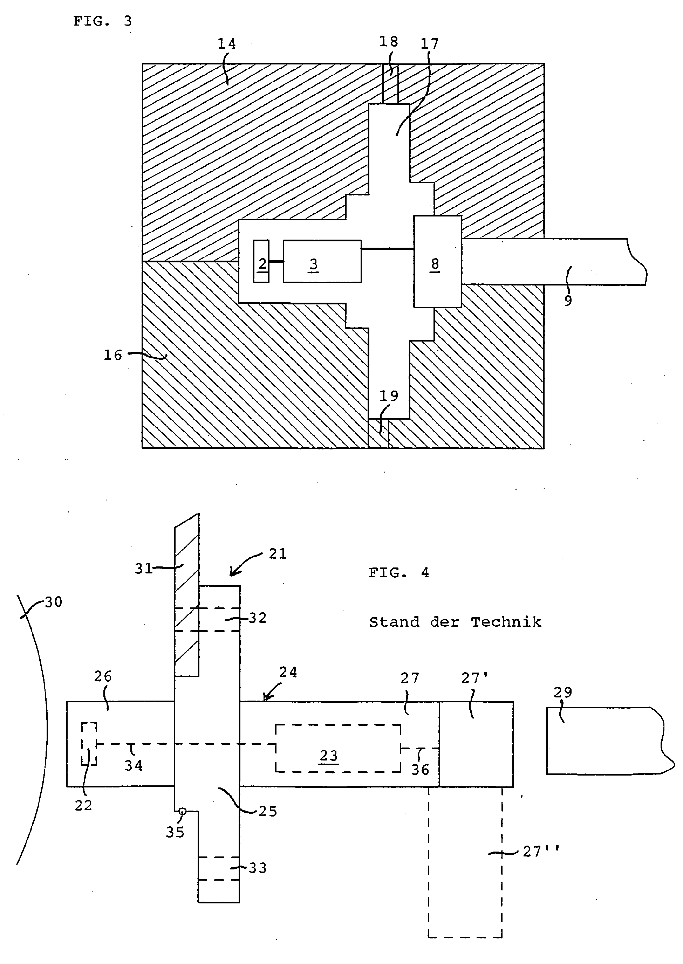

Drehzahlsensoren, bei denen ein drehender Geberteil an einem stillstehenden Sensorteil vorbei bewegt wird, sind in verschiedenen Ausführungen bekannt. Der eigentliche Sensor, der im stillstehenden Sensorteil angeordnet ist, kann z.B. induktiv arbeiten oder ein Magnetfeldsensor aus Halbleitermaterial sein, wobei in diesem Fall der Geber z.B. von einem Polrad gebildet ist. Drehzahlsensoren werden insbesondere auch für Bahnanwendungen (z.B. Eisenbahnen, Strassenbahnen, Untergrundbahnen) eingesetzt und finden dort z.B. Verwendung bei Antiblockiersystemen für die Bremsen, für die Drehzahl- und Drehrichtungserkennung bei den Antriebssystemen, für Signalisationen und Black-Box Systeme und für Türverriegelungen. Bei den Bahnanwendungen sind häufig Einbauorte mit unwirtlichen Umgebungsbedingungen vorgesehen und entsprechende Prüfbedingungen sind in internationalen Normen festgelegt. So werden bahntaugliche Baugruppen z.B. nach EN50155 verschiedenen Umweltprüfungen (Kälte, trockene Wärme, feuchte Wärme) sowie auch elektrischen Prüfungen und mechanischen Prüfungen (Schock, Schwingungen) unterzogen. Wegen der entsprechend im Bahnbetrieb auftretenden Temperaturen, Vibrationen, Schläge und Verschmutzungen werden nach Stand der Technik Metallgehäuse für den stillstehenden Drehzahlsensorteil verwendet, an welchen in der Regel speziell geschützte oder armierte Kabel angeschlossen werden. Eine häufig verwendete Bauform eines stillstehenden Drehzahlsensorteils 21 ist in Figur 4 gezeigt und weist einen Standard-Flanschteil 25 zur Befestigung des stillstehenden Drehzahlsensorteils in einer gegenüber dem Geber definiert orientierten Einbaulage auf. Von diesem Flanschteil ragt in eine Richtung (in Einbaulage zum Geber hin) ein Sensorabschnitt 26 und in die entgegengesetzte Richtung ein etwas längerer Anschlussabschnitt 27 ab, wobei der Anschlussabschnitt die Sensorelektronik 23 (zum Anschluss und zur Speisung des Sensors 22 und zur Signalaufbereitung des Sensorsignals) und den eigentlichen Kabelanschluss umfasst. Das relativ steife armierte oder mit einem Schutzschlauch versehene Kabel 29 kann dabei hohe Kräfte über den Anschlussabschnitt auf das Metallgehäuse ausüben. Solche stillstehenden Drehzahlsensorteile haben sich bewährt, sind aber herstellungs- und kostenaufwendig.

Der Erfindung liegt die Aufgabe zugrunde einen stillstehenden Drehzahlsensorteil der eingangs genannten Art und einen Drehzahlsensor mit einem solchen Teil zu verbessern.

Diese Aufgabe wird gemäss Anspruch 1 gelöst bzw. mit einem Drehzahlsensor gemäss Anspruch 11 gelöst.

Dadurch, dass der Raum für die Sensorelektronik im Sensorabschnitt und/oder im Befestigungsteil des Gehäuses liegt, kann der Kabelanschlussabschnitt so ausgestaltet sein, dass er nur sehr wenig vom Befestigungsabschnitt wegragt oder allenfalls in diesem enthalten ist. Entsprechend übt das Anschlusskabel bei der Verlegung und im Betrieb eine viel geringere Kraft auf das Gehäuse aus. Es können auch die bisher für einen winkligen Kabelanschluss vorgesehenen Anpassstücke entfallen, da das Kabel im selben Einbauraum gekrümmt weggeführt werden kann.

Die neue Ausgestaltung erlaubt es aufgrund der geringeren Kräfte auf das Gehäuse dieses teilweise oder ganz aus Kunststoff auszuführen, was eine bevorzugte Ausführungsform ist. Weiter ist es bevorzugt, das Gehäuse einstückig aus Kunststoff auszubilden, vorzugsweise mit dem Kabeleinführungsabschnitt. Als Kabelgreifglied und Zugentlastung kann ein Kragen, z.B. aus Metall, vorgesehen sein, der das Kabel an der Eintrittsstelle in das Gehäuse umgibt und der teilweise im Kabelanschlussabschnitt und teilweise frei liegt. Vorzugsweise ist das Gehäuse aus Epoxidharz mittels einer Epoxid-Formmasse resp. Epoxid-Vergussmasse gebildet und bevorzugterweise als Spritzgussteil um den Sensor, die Sensorelektronik und das Anschlusskabel und gegebenenfalls den Kragen herum gespritzt. Dies macht eine im wesentlichen hohlraumlose Ausgestaltung des Gehäuses als einstückiger Kunststoff- bzw. Epoxidkörper möglich.

Die bevorzugte Anwendung des erfindungsgemässen stillstehenden Drehzahlsensorteiles bzw. des mit einem passenden Geber vervollständigten Drehzahlsensors liegt bei Schienenfahrzeugen. Dabei kann der Sensor, besonders mit dem bevorzugten einstückigen Kunststoffgehäuse, eine den rauhen Einsatzbedingungen und den Normen entsprechende und dennoch kostengünstige Lösung bereitstellen. Bei der bevorzugten Herstellung des Drehzahlsensorteils gemäss der Erfindung erfolgt diese durch Umspritzen oder Umgiessen des Sensors und der Sensorelektronik. Vorzugsweise wird ein Epoxidharz spritzgegossen.

Im folgenden wird der Stand der Technik und werden Ausführungsbeispiele der Erfindung anhand der Figuren näher erläutert. Dabei zeigt
Figur 1 schematisch eine Vertikalschnittansicht eines stillstehenden Drehzahlsensorteils gemäss der Erfindung;
Figur 2 eine Frontalansicht des Drehzahlsensorteils von Figur 1;
Figur 3 schematisch eine Darstellung einer Form zur Herstellung des Drehzahlsensorteils; und
Figur 4 ein Drehzahlsensorteil nach Stand der Technik.

In Figur 4 ist ein stillstehender Drehzahlsensorteil 21 nach Stand der Technik schematisch dargestellt. Dieser Drehzahlsensorteil 21 wird z.B. an einer feststehenden Platte 31, welche nur in der oberen Hälfte der Figur 4 angedeutet ist, befestigt. Diese Platte kann z.B. Teil eines Schienenfahrzeuges sein. Ein nur angedeuteter drehender Geber 30 dreht mit einem Teil des Schienenfahrzeuges mit, dessen Drehzahl oder Bewegung erfasst werden soll. Der Geber ist derart ausgestaltet, dass er mit einem Sensor 22 im stillstehenden Drehzahlsensorteil 21 zusammenarbeitet, so dass die Drehung des Gebers 30 berührungslos erfasst werden kann. Derartige Geber 30 und Sensoren 22 sind nach verschiedenen Funktionsprinzipien (z.B. induktiv oder magnetisch) dem Fachmann bekannt und brauchen hier nicht weiter erläutert zu werden. Das Gehäuse 24 des stillstehenden Sensorteils 21 ist für Anwendungen mit unwirtlichen Bedingungen, insbesondere Anwendungen bei Schienenfahrzeugen, aus Metall gefertigt und weist separate Abschnitte auf, so den Flanschabschnitt 25, der zur Befestigung an der Platte 31 mittels Gewindebolzen durch die Bohrungen 32 und 33 ausgestaltet ist. Der Flanschabschnitt 25 kann dabei mit seinem mittleren Teil in eine Ausnehmung der Platte 31 ragen und gegebenenfalls durch einen O-Ring 35 abgedichtet sein. Vom Flanschteil 25 hin erstreckt sich ein Gehäuseteil 26, welcher den erwähnten Sensor 22 aufnimmt. In die Gegenrichtung erstreckt sich ein Anschlussteil 27, in welchem die Sensorelektronik 23 vorgesehen ist, welche über eine nur angedeutete Verbindung 34 elektrisch mit dem Sensor 22 verbunden ist. Die Sensorelektronik speist den Sensor und bereitet dessen Signale zur Weiterleitung über ein Kabel 29 auf, welches ganz rechts angedeutet ist. Das Kabel 29 kann fest am Anschlussteil 27 angeschlossen sein oder über eine angedeutete Steckverbindung 27' mit dem Anschlussteil 27 verbindbar sein. Das Anschlussteil 27 kann auch abgewinkelt sein, was durch den mit unterbrochener Linie dargestellten abgewinkelten Teil 27" dargestellt ist. Von der Sensorelektronik führt eine nur angedeutete Verbindung 36 zum Kabel bzw. zum Stecker 27'. Das Kabel 29 ist in der Regel ein armiertes, steifes Kabel, welches bei Bewegungen erhebliche Kräfte auf das Gehäuse 24 des stillstehenden Sensorteils 21 ausübt. Auch bei fester Verlegung des Kabels treten solche Kräfte durch Wärmeausdehnung, Vibration und Schläge auf und müssen vom Gehäuse aufgenommen werden was indes mit den herkömmlichen Metallgehäusen bei entsprechender Auslegung derselben möglich ist.

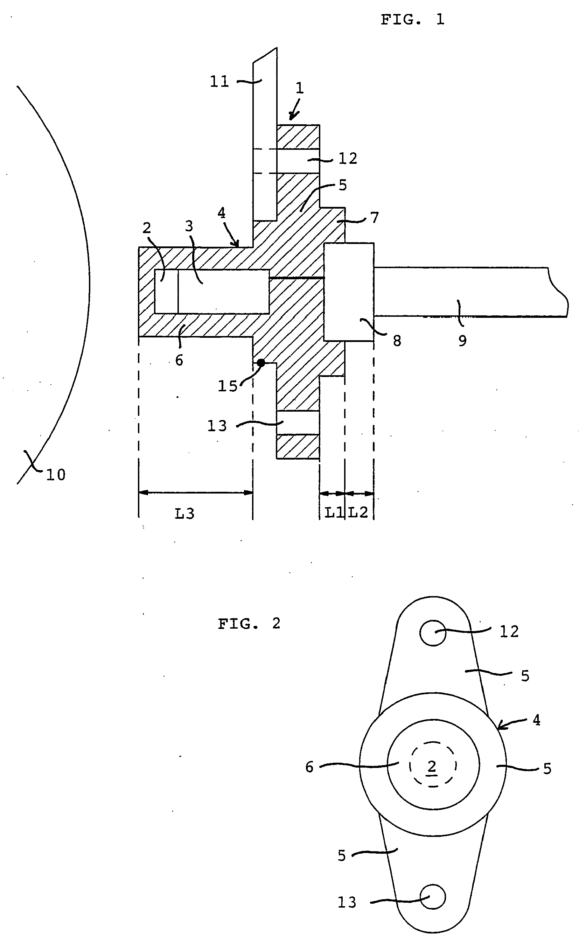

Figur 1 zeigt nun eine teilweise geschnittene Darstellung eines stillstehenden Drehzahlsensorteils 1 gemäss der Erfindung. Dieses ist wiederum als Beispiel an einer Platte 11 befestigt, welche bei einer bevorzugten Anwendung Teil eines Schienenfahrzeuges ist. Das Gehäuse 4 des stillstehenden Sensorteils 1 weist einen Befestigungsabschnitt 5 auf, welcher vorzugsweise wiederum ein Flanschabschnitt ist, welcher mit den Ausnehmungen 12 und 13 zur Befestigung in der Platte 11 vorgesehen ist, wie dies nach Stand der Technik bekannt ist. Figur 2 mit der Frontalansicht zeigt dabei den Befestigungsabschnitt in der Form eines Flansches. Auch bei der Erfindung kann der Befestigungsabschnitt 5 des Sensorteils 1 so ausgeführt werden, dass er in eine Ausnehmung der Platte 11 hineinragt und gegenüber dieser mit einem O-Ring 15 abgedichtet ist. Dies ist allerdings nur als bevorzugtes Beispiel zu verstehen und es können auch andere Befestigungsmöglichkeiten vorgesehen sein, so z.B. ein Gewinde an demjenigen Absatz des Befestigungsteils 5, an dem in der Figur der O-Ring gezeigt ist und ein Gegengewinde in der Ausnehmung der Platte 11, so dass der Sensorteil 1 in die Platte einschraubbar ist. Zum hier mit 10 angedeuteten Geber hin ist ein Sensorabschnitt 6 des Gehäuses vorgesehen, welcher wiederum den eigentlichen Sensor 2 aufnimmt bzw. einen Raum für diesen vorsieht. Gemäss der Erfindung ist nun die Sensorelektronik 3 in dem Sensorabschnitt 6 des Gehäuses und/oder im Befestigungsabschnitt 5 des Gehäuses 4 angeordnet. Figur 1 zeigt eine Ausführungsform, bei welcher die Sensorelektronik 3 sowohl im Sensorabschnitt als auch im Befestigungsabschnitt des Gehäuses 4 angeordnet ist. Je nach Form und Grösse des Gehäuses bzw. der Sensorelektronik kann diese in einem oder beiden der Abschnitte 5 bzw. 6 angeordnet sein bzw. ist der entsprechende Raum in diesen Abschnitten dafür vorgesehen. Vorzugsweise ist die Sensorelektronik 3 als kundenspezifische integrierte Schaltung (application specific integrated circuit; ASIC) ausgestaltet. Sie kann mit dem separaten Sensor 2 auf beliebige Weise verbunden sein; bei einer bevorzugten Ausführungsform ist die integrierte Schaltung mit dem Sensor vereinigt und beinhaltet somit direkt den Sensor. In der Figur 1 ist diese Variante mit den direkt aneinandergrenzenden Rechtecken 2 und 3 dargestellt, die den Sensor und die Sensorelektronik symbolisieren. Es ist weiter ersichtlich, dass der stillstehende Drehzahlsensorteil 1 gemäss der Erfindung nur einen sehr kurzen Kabelanschlussabschnitt 7 aufweist, was durch die Verlegung der Sensorelektronik 3 in die Abschnitte 5 und/oder 6 ermöglicht ist. Der Kabelanschlussabschnitt 7 ist in Figur 1 als separater Abschnitt dargestellt, kann aber allenfalls auch mit dem Anschlussabschnitt 5 zusammenfallen. Das Kabel 9 kann an einem im Kabelanschlussabschnitt 7 angeordneten Stecker ansteckbar sein oder es kann direkt im Anschlussabschnitt 7 des Gehäuses 4 befestigt sein. In Figur 1 ist eine bevorzugte Ausführungsform gezeigt, bei welcher am Kabel 9 ein Kragen 8 bzw. eine Klemme angeordnet ist, welche auf beliebige bekannte Weise mit dem Kabel 9 zugfest verbunden ist. Dieser Kragen 8 wird im Anschlussabschnitt 7 des Gehäuses fixiert, was noch erläutert wird. Der Kragen 8 besteht vorzugsweise aus Metall, kann aber auch aus einem Kunststoff bestehen. Die Sensorelektronik 3 ist direkt oder über Zwischenleitungen mit dem Kabel 9 verbunden, was in der Figur 1 lediglich durch eine Linie angedeutet ist.

Durch den kurzen Kabelanschlussteil 7 ergibt sich eine wesentlich geringere Hebelwirkung von Kabelkräften auf das Gehäuse 4. Dadurch kann einerseits ein Metallgehäuse kostengünstiger ausgeführt werden, andererseits und bevorzugterweise wird hingegen das Gehäuse 4 aus Kunststoff ausgeführt, was bei den reduzierten Kräften im Anschlussabschnitt 7 möglich wird. Das Gehäuse 4 kann mehrteilig aus Kunststoff ausgeführt sein, ist aber besonders bevorzugt ein einteiliges Kunststoffgehäuse, wie dies in der Figur dargestellt ist. Im Falle eines mehrteiligen Gehäuses werden der Sensor 2, die Sensorelektronik 3 und Kabelanschlussteile bei der Montage im Gehäuse auf bekannte Weise befestigt und z.B. in den für den Sensor 2 und die Sensorelektronik 3 vorgesehenen Hohlräumen des Gehäuses festgeklemmt und/oder eingegossen. Bei dem bevorzugten einstückigen Kunststoffgehäuse können der Sensor 2, die Sensorelektronik 3 und auch die Kabelanschlussteile, insbesondere der Kragen 8, direkt bei der Gehäuseherstellung in dieses aufgenommen werden, was noch genauer erläutert wird. In der Figur 1 ist mit den Längen L verdeutlicht, dass beim dem erfindungsgemässen stillstehenden Drehzahlsensorteil 1 nun durch die Verlagerung der Sensorelektronik ein sehr kurzer Kabelanschlussabschnitt 7 erzielt werden kann, wobei dieser kürzer ist als der eigentliche Sensorabschnitt 6. In der Figur ist dieser mit der Länge L3 dargestellt und der Kabelanschlussabschnitt 7 mit der wesentlich kürzeren Länge L1. Kommt allenfalls der Kragen 8 mit der über den Anschlussabschnitt 7 vorstehenden Länge L2 hinzu, so ist auch die Summe der Längen L1 + L2 vorzugsweise geringer als die Länge L3 des Sensorabschnittes und vorzugsweise geringer als die Hälfte bzw. vorzugsweise ein Drittel bzw. ein Viertel von L3. Auf diese Weise lässt sich ein kostengünstiges, vorzugsweise einstückiges Gehäuse 4 eines stillstehenden Drehzahlsensorteils 1 schaffen, welches auch rauhen Betriebsbedingungen gewachsen ist und insbesondere für Anwendungen bei Schienenfahrzeugen geeignet ist.

Figur 2 zeigt die Frontalansicht mit dem Befestigungsabschnitt 5, der als Flansch ausgeführt ist, dem Sensorabschnitt 6 und angedeutet darin enthalten dem Sensor 2.

Bevorzugterweise ist das Gehäuse 4 des Sensorteils 1 aus Kunststoff gebildet. Dazu kommen grundsätzlich beliebige Kunststoffe in Frage, aus welchen das Gehäuse für die gewünschten Betriebsbedingungen z.B. durch Spritzgiessen herstellbar ist. Bevorzugterweise wird als Kunststoff ein Epoxidharz verwendet, allenfalls mit einer zusätzlichen Faserarmierung durch dem Epoxidharz beigemischte Fasern. Für ein einstückiges Kunststoffgehäuse für die Anwendung bei Schienenfahrzeugen kommt vorzugsweise ein Epoxidharz vom Typ Araldit® Epoxid-Formmasse XB 5680 der Firma Duresco GmbH, Basel, Schweiz in Frage. Dieses Epoxidharz kann durch Spritzgiessen bei relativ geringen Drücken von ca. 300 bis 900 bar in der zu füllenden Kavität verarbeitet werden. Es ist damit möglich, das Gehäuse 4 einstückig durch Spritzgiessen zu bilden, wobei die Hohlräume für den Sensor 2, die Sensorelektronik 3 und die gewählte Kabelanschlussvariante direkt durch das Umspritzen der entsprechenden Komponenten gebildet werden.

Figur 3 zeigt schematisch eine Spritzgussform mit den Hälften 14 und 16, welche zwischen sich einen Hohlraum 17 bilden, in welchen das Kunststoffmaterial, vorzugsweise das genannte Epoxidharz, durch nur angedeutete Einspritzöffnungen 19 eingebracht und der Hohlraum 17 bis zu nur angedeuteten Entlüftungsöffnungen 18 gefüllt werden kann. Das genannte Epoxidharz ermöglicht einen relativ sanften Spritzprozess mit geringem Druck und ein Gehäuse, welches bei erfindungsgemässer Ausgestaltung die auftretenden Kräfte ohne weiteres aufnehmen kann. In Figur 3 ist angedeutet, wie der Sensor 2, die Sensorelektronik 3 und in diesem Fall der Kragen 8 in der Spritzgussform angeordnet sind. Diese Elemente werden durch nicht dargestellte Fixationsmittel gehalten, so dass sie ihre Lage bei der Befüllung der Form beibehalten. Der Kragen 8 kann insbesondere mit Vorsprüngen und/oder Ausnehmungen in demjenigen Bereich versehen sein, in dem er umspritzt wird, um eine möglichst gute Verankerung des Kragens 8 im Kunststoffmaterial zu erzielen. Natürlich ist die Ausführungsform mit dem eine Befestigung und Zugentlastung bildenen Kragen 8 nur als bevorzugte Ausführungsform zu verstehen. Es könnte auch ein Steckanschluss für das Kabel 9 eingegossen werden oder allenfalls direkt das Kabel 9.

Das Kabel wird durch die bevorzugte Herstellungsart dicht mit dem Gehäuse verbunden und der Sensor und die Sensorelektronik werden durch das Umgiessen mit dem Kunststoff bzw. Epoxidharz sowohl thermisch als auch mechanisch sehr gut geschützt, was einen langzeitstabilen Sensor ergibt.

## Patentansprüche

1. Stillstehender Drehzahlsensorteil (1) mit einem Sensor (2), einer Sensorelektronik (3) und einem Gehäuse (4), welches einen Befestigungsabschnitt (5), einen daran in einer Richtung anschliessenden Sensorabschnitt (6) und gegebenenfalls einen an der entgegengesetzten Richtung liegenden Kabelanschlussabschnitt (7) aufweist, **dadurch gekennzeichnet, dass** der Raum für die Sensorelektronik überwiegend oder vollständig im Sensorabschnitt (6) und/oder im Befestigungsabschnitt (5) vorgesehen ist.

2. Drehzahlsensorteil nach Anspruch 1, **dadurch gekennzeichnet, dass** der Befestigungsabschnitt (5) und der Sensorabschnitt (6) aus Kunststoff gebildet sind.

3. Drehzahlsensorteil nach Anspruch 2, **dadurch gekennzeichnet, dass** der Kabelanschlussabschnitt (7) aus Kunststoff gebildet ist.

4. Drehzahlsensorteil nach Anspruch 2 oder 3, **dadurch gekennzeichnet, dass** die Abschnitte ein einstükkiges Kunststoffgehäuse bilden.

5. Drehzahlsensorteil nach einem der Ansprüche 2 bis 4, **dadurch gekennzeichnet, dass** der Kunststoff ein Epoxidharz, insbesondere ein faserverstärktes Epoxidharz ist.

6. Drehzahlsensorteil nach einem der Ansprüche 4 oder 5, **dadurch gekennzeichnet, dass** das Gehäuse ein einstückig spritzgegossenes Gehäuse ist, das den Sensor (2), die Sensorelektronik (3) und zumindest teilweise die Kabelanschlüsse an die Sensorelektronik im wesentlichen hohlraumfrei umgibt.

7. Drehzahlsensorteil nach einem der Ansprüche 1 bis 6, **dadurch gekennzeichnet, dass** das zur Kabelbefestigung ein im Kabelanschlussteil fixierter Kragen (8), insbesondere aus Metall, vorgesehen ist.

8. Drehzahlsensorteil nach einem der Ansprüche 1 bis 7, **dadurch gekennzeichnet, dass** die Länge L1 des Kabelanschlussabschnittes (7), gegebenenfalls mit der Länge L2 des daraus hervorragenden Kragens (8), geringer als die Länge L3 des Sensorabschnittes (6) ist und insbesondere geringer als die Hälfte der Länge des Sensorabschnittes ist und insbesondere geringer als 1/3 oder 1/4 des Sensorabschnittes ist.

9. Drehzahlsensorteil nach einem der Ansprüche 1 bis 8, **dadurch gekennzeichnet, dass** die Sensorelektronik eine mit dem Sensor vereinigte integrierte Schaltung ist, oder dass die Sensorelektronik eine mit dem separaten Sensor verbundene integrierte Schaltung ist.

10. Drehzahlsensorteil nach einem der Ansprüche 1 bis 9, **dadurch gekennzeichnet, dass** der Befestigungsabschnitt als Flansch ausgebildet ist.

11. Drehzahlsensor mit einem stillstehenden Drehzahlsensorteil nach einem der Ansprüche 1 bis 10 und einem zur Drehbewegung vor dem Sensorabschnitt bestimmten Geber (10).

12. Anwendung eines stillstehenden Drehzahlsensorteiles nach einem der Ansprüche 1 bis 10 bzw. eines Drehzahlsensors nach Anspruch 11 zur Drehzahl- und/oder Bewegungsermittlung bei Schienenfahrzeugen.

13. Verfahren zur Herstellung eines stillstehenden Drehzahlsensorteiles nach einem der Ansprüche 1 bis 10, **dadurch gekennzeichnet, dass** ein Sensor und eine Sensorelektronik in einer Form mit einem Kunststoff umspritzt oder umgossen werden.

14. Verfahren nach Anspruch 13, **dadurch gekennzeichnet, dass** mit einem Epoxidharz umgossen und vorzugsweise umspritzt wird.

15. Verfahren nach Anspruch 13 oder 14, **dadurch gekennzeichnet, dass** das Anschlusskabel des Sensorteils im Kabelanschlussabschnitt des Drehzahlsensorteiles umspritzt oder umgossen wird.

16. Verfahren nach Anspruch 15, **dadurch gekennzeichnet, dass** dabei das Anschlusskabel mit einem Kragen versehen ist, der teilweise umspritzt oder umgossen wird und teilweise frei liegt.
